# EUROPEAN PATENT APPLICATION

(11) **EP 4 414 585 A1**
(43) Date of publication of application: **14.08.2024**
(21) Application number: 24156523.3
(22) Date of filing: 08.02.2024
(51) Int. Cl.: F16H 37/08, B60K 1/00, F16H 63/34, F16H 57/021, F16H 48/08

(54) **COMPACT DRIVETRAIN WITH A DISCONNECT DEVICE AND A PARKING LOCK FOR A VEHICLE**

(30) Priority: 10.02.2023 EP 23156066
(71) Applicant: hofer powertrain innovation GmbH, 72622 Nürtingen (DE)
(72) Inventor: Dr. Lutz, Mathias, 72070 Tübingen (DE)
(74) Representative: Cremer & Cremer

(57) **Abstract**

A drivetrain 2 for a vehicle with an electric propulsion motor 4 having a hollow rotor shaft 9 comprises a transmission 100 with at least a hollow first shaft 24 and a bifid second shaft 28 being a countershaft. The drivetrain 2 comprises a parking lock 70 and a differential 76 connected with two output shafts 84, 90. Rotational speed of the first shaft 24 is reduced by a transmission stage 14, 16, 17 formed by at least two gearwheels 50, 52, a first gearwheel 50 fixed to the first shaft 24 and a second gearwheel 52 fixed to the second shaft 28, and a planetary transmission 17. The first gearwheel 50 is a sun gear of a planetary transmission 17. A disconnect 60 is part of the bifid second shaft 28, which is arranged to be switched into a disconnected state while a prevailing torque is introduced from a secondary side. The first shaft 24 and the rotor shaft 9 are connected with each other and supported in a coaxial shaft arrangement by a common bearing arrangement 98.

## Description

This invention relates to a drivetrain for a vehicle with an electric propulsion motor, which has at least a first shaft and a second shaft as driving shafts between the electric propulsion motor and a differential and output shafts connected with the differential. Rotational speed of the first shaft is reduced by a transmission stage comprising at least two gearwheels. In a state of operation, the propulsion motor provides torque through a gear stage to the differential.

In other words, the invention relates to a drivetrain for a vehicle according to the preamble of claim 1 as well as an operation of a drivetrain according to the preamble of claim 15.

### Technical Field

Powertrains for electric vehicles are very often designed as an electric axle between vehicle wheels. An example of such a powertrain is described in DE 10 2011 015 691 A1 (applicant: Volkswagen AG; publication date: 04.10.2012) wherein a parking lock wheel, a clutch, an electric motor a transmission gearing and a differential, form a collinear arrangement. The parking lock with its component parking lock wheel is supposed to prevent parked vehicles from unintended rolling away. The patent application DE 101 31 735 A1 (applicant: Volkswagen AG; publication date: 16.01.2003) describes a parking lock for a vehicle having an automatic transmission. A parking lock gear is mounted sideways on an annular projection on an outer circumference of a differential gear housing in a torque-proof manner. A drive gear is supposed to be attached to the opposite side of the annular projection. An actuator for the parking lock comprises a pivotable locking lever having a tooth arranged on top of the parking lock gear. The tooth can engage with one of the tooth spaces of the parking lock gear and prevent the parking lock gear from further rotation. A mechanism for actuation of the lever is provided at an upward-facing end of the locking lever.

Powertrains furthermore typically comprise a transmission, which is used for adjustment of torque and rotation speed between a motor or an engine and vehicle wheels. For example, a transmission arrangement comprising a displaced electric motor is described in US 8 616 087 B2 (assignee: GKN Driveline Japan, Ltd.; date of patent: 31.12.2013), also published as DE 10 2012 103 367 B4. In this design, which comprises an electric motor and an additional motor, i. e. a hybrid drive, those motors are arranged with their respective shafts parallel and sideways from a so-called "third shaft", which is an intermediate shaft of the transmission, and also sideways from a differential. When a clutch between the motor and the transmission is closed, the electric motor can be driven by the additional motor. In this mode, the electric motor is used as a generator in order to charge a battery of the vehicle. Two axes are connected to the differential for driving two wheels of a vehicle. The intermediate shaft carries two clutches for coupling gear-sets of respective motors to the output, and an output gear, which meshes with a ring gear of the differential. In addition, a toothed parking gear is fixed to the intermediate shaft.

### Background art

Drive arrangements described in patent application DE 10 2022 121 522 A1 (applicant: FEV Group GmbH; publication date: 22.12.2022), in patent application US 2021/394 601 A1 (applicant: ZF Friedrichshafen AG; publication date: 23.12.2021), in patent application FR 2 963 651 A1 (applicant: Peugeot Citroen Automobiles S.A.; publication date: 10.02.2012) and in international patent application WO 2018/095 544 A1 (applicant: GKN Automotive Ltd.; publication date: 31.05.2018) comprise an electric motor with a drive shaft, which is connected via an intermediate shaft to a differential and to output shafts. The respective drive trains comprise a parking lock and a coupling element arranged in the power flow. The intermediate shaft, the drive shaft, such as the rotor shaft, and the output shafts are laterally offset from each other. Therefore respective designs require considerable constructional space within a vehicle.

In patent application DE 10 2012 024 751 A1 (applicant: Volkswagen AG; application date: 18.06.2014), a transmission combined with a differential gear and with a housing for an electric drive is described. The transmission comprises an input shaft and two output shafts in a coaxial arrangement. The transmission is supposed to comprise two planetary gear stages, namely an input stage and a load stage and a compensation section. The differential is described as being a spur gear differential. A clutch is provided, which should allow connection and disconnection of a ring gear of the input stage with a planet carrier of a planet gear of the input stage or with a planet carrier of a planet gear of the load stage. The authors furthermore suggest that a shaft of the planet gear of the input stage should be connected with a parking lock spur wheel. A parking lock mechanism provided in the housing is supposed to engage with the parking lock spur wheel.

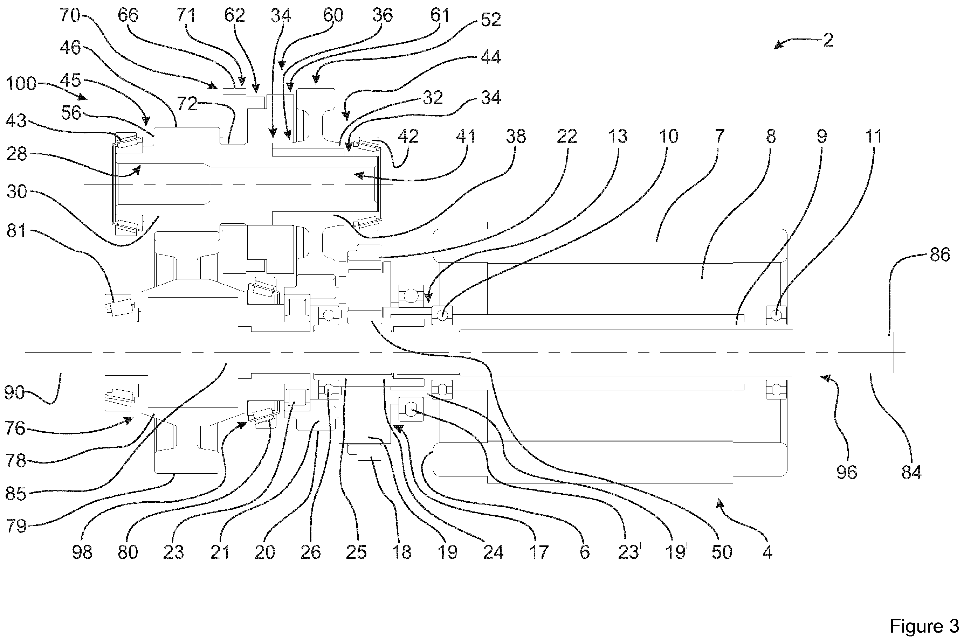

Document CN 105 620 259 A (applicant: Schaeffler Tech GmbH & Co. KG.; publication date: 01.06.2016) shows a lay shaft in a collinear arrangement with a motor axis in figure 3.

Different examples of collinear drivetrain arrangements are described e. g. in the documents
CN 114 537 042 A (Applicant: Changsha CRRC Zhiyu New Energy Technology Co., Ltd.; CRRC Times Electric 5 Vehicle Co., Ltd.; publication date: 26.11.2020);
DE 10 2020 210 677 B4 (assignee: MAGNA Powertrain GmbH & Co KG; publication date: 24.02.2022),
EP 3 919 777 A1 (applicant: Robert Bosch GmbH; publication date: 08.12.2021),
US 10,781,921 B2 (assignee: Honda Motor Co., Ltd.; publication date: 22.09.2020),
JP 2020 133 775 A (applicant: Jatco Ltd.; publication date: 31.08.2020) and in
US 2021/0 231 213 A1 (applicant: GKN Automotive Ltd.; publication date: 29.07.2021).

According to patent US 8 968 137 B2 (assignee: GETRAG Getriebe- und Zahnradfabrik Hermann Hagenmeyer GmbH und Cie KG; date of patent: 03.03.2015), also published as EP 2 532 546 B1, in particular in an embodiment shown in figure 3, a machine shaft of an electric machine should be connected with a transmission input shaft via a toothed section. The two shafts are provided as hollow shafts, in which one of the two drive shafts for wheels is inserted. A parallel intermediate shaft is supposed to carry two clutches, a parking lock gear and a pinion for driving a differential. With this configuration, the differential can be decoupled from the electric machine.

A vehicle propulsion system described in patent application US 2019/248 244 A1 (applicant: GM Global Technology Operations LLC; publication date 15.08.2019) comprises a hollow rotor shaft and an input drive sprocket mounted on the rotor shaft. A first chain is supposed to connect the input drive sprocket with a transfer driven sprocket mounted on a transfer shaft. A second chain is mounted on the transfer drive sprocket and also on a final drive driven sprocket. The transfer drive sprocket is supposed to be integrated into a housing of a bevel gear differential. According to the authors of US 2019/248 244 A1, the chain drive system is meant to operate with much less noise and vibration as compared to a gear set. Furthermore, the chain/sprocket system is supposed to not generate axial thrust loads and therefore more compact roller type bearings rather than ball bearings could be used. In another exemplary described embodiment, the bevel gear differential is replaced by a planetary spur gear differential.

The utility model DE 20 2005 019 438 U1 (owner: GETRAG Innovations GmbH; publication date: 24.05.2007) relates to a drive unit for a motor vehicle with an electric drive motor, with a change gear, and with a differential gear. The change gear has at least two gear stages. The motor can provide an input to the change gear via a transmission drive shaft and an output of the change gear is connected to an input member of the differential gear. The transmission drive shaft is designed as a hollow shaft and one of the wheel drive shafts is guided through the transmission drive shaft. The transmission drive shaft can be mounted on a housing wall, which separates a housing section dedicated for the drive motor from a housing section dedicated for the gearbox. The housing wall can be designed as a bearing bracket. A constant gear-set connects the transmission drive shaft with an intermediate shaft. The change gear is supposed to comprise first speed and second speed gear-sets, each having a fixed gear connected with an input section of the differential and each having a freewheel, which can be connected by a clutch with the intermediate shaft. Furthermore a parking lock is described, which can lock a solid wheel on the intermediate shaft by actuating a pin. The parking lock can be configured for intermediate energy storage so that the energy is available for an engagement when the vehicle is moving. The type of inserted bearings is not described in detail but symbols of ball bearings are shown in the three figures of DE 20 2005 019 438 U1.

In figure 16 of patent application WO 2018/045 027 A1 (applicant: Dana Heavy Vehicle Systems Group, LLC; international publication date: 08.03.2018), a configuration of an electric machine is shown, through which an axle half shaft extends in a coaxial manner. A driving shaft is formed as a hollow shaft, which is connected with a sun gear of a planetary gear system. A planet carrier of said planetary gear system is connected with a driven gear, which meshes with an input gear mounted on a lay shaft. The lay shaft is parallel offset from the electric machine axis. The lay shaft carries two engagement elements for respective toothed wheels arranged on the lay shaft, both of which can drive a differential case depending on two selectable states of operation of the transmission. Two speed reduction modes are described. Furthermore according to an embodiment shown in figure 19, the authors suggest a transmission design which has a parking brake connected with a lay shaft.

The content of the cited documents may be considered to be incorporated by their subject matter. This is done with the objective to avoid re-defining generally known terms of the present invention newly although known by persons skilled in the art, like designs of vehicles, drive trains, electric motors, clutches, actuation systems and controllers. The cited documents inter alia serve as basis for definitions used herein unless a different meaning is given by the present specification.

### Difficulties known from prior art and approaches to the problems

The technological shift of individual mobility on roads using internal combustion motors towards electric mobility creates a regular demand for most compact and efficient powertrains, which can conform to high requirements for safety reliability and comfort. Conversion of electric energy to dynamic torque is supposed to be carried out with a smooth running transmission, which can be arranged near the driven axle. Components of a transmission are preferably easy to assemble. The transmission should have a design that can transmit high torques. Masses within the powertrain to be accelerated in operation of a vehicle are supposed to be rather low. In a state when operation is not well under control or when the vehicle is to be left alone, the vehicle should be secured against rolling away or it should at least be possible to secure the vehicle mechanically against unintended operation such as unauthorized driving.

### Description of the invention

The difficulties known from prior art and further problems can be overcome at least to some extent with a drivetrain for a vehicle according to claim 1 as well as by an operation of a drivetrain arrangement according to claim 15. Furthermore, some difficulties rooted in aspects of a drivetrain are overcome as described in dependent claims.

A drivetrain for a motor vehicle, such as a passenger car, a light truck, a sport utility vehicle or a van, in particular a sub-compact car, which can also be named a mini- or micro-car, comprises at least one propulsion motor. Considering environmental protection, exhaust fumes should be reduced by design of the drivetrain. A preferred power unit of a vehicle comprises at least one electric propulsion motor. In this respect, an advantageous hybrid design of a vehicle, for which a drivetrain may be of advantage, may comprise an additional internal combustion engine, in particular a speed-regulated engine, which is typically operated at an efficiency maximum for charging an on board battery.

A battery can be connected with the electric propulsion motor and thus provide electric current, preferably through a power-electronics arrangement, for driving the vehicle. Different types of electric motors comprise at least one rotor and at least one stator, which may be used together with the drivetrain. Such electric propulsion motors can be selected by skilled engineers.

The drivetrain comprises a transmission having at least two shafts, a first shaft and a second shaft (at least one second shaft), as driving shafts, arranged between the electric propulsion motor and a differential. The two shafts are preferably mounted to be rotatable inside a housing. The shafts are designed for transmission of torque to at least one output, in particular towards at least one vehicle wheel. In addition two output shafts, a first output shaft and a second output shaft, are part of the drivetrain. The output shafts are connected with the differential of the drivetrain. In this respect, the output shafts can be considered as outputs of the differential, wherein each output shaft is designed for transfer of at least a part of an input torque to at least one vehicle wheel. A joint shaft may be arranged between the output shaft and the wheel. Torque can be provided by the electric propulsion motor to the drivetrain in such a way that the vehicle is moved either in a forward direction or in a reverse direction.

The drivetrain is preferably arranged as a two wheel drive of a vehicle. The concept of the drivetrain is also applicable as a rear wheel drive and/or a steerable front wheel drive. In other words, the drivetrain can be designed such that all four (or six) wheels of a vehicle are provided with torque. In particular separate electric motors can be installed in one vehicle such as a four wheel drive vehicle or a sports vehicle, preferably one electric propulsion motor for each axle, i. e. a front propulsion motor or a respective front drivetrain and a rear propulsion motor or a respective rear drivetrain.

The drivetrain comprises at least one transmission stage for reducing a rotational speed of the electric propulsion motor. The transmission stage can also be named a reduction stage. The transmission stage comprises at least two toothed wheels having a different number of teeth. The transmission stage comprises a gear on the first shaft and the gear on the second shaft. Additional gears are arranged between the gear on the first shaft and the gear on the second shaft such as a planetary gear-set. The gear on the first shaft is a sun gear. Rotational speed provided by the first shaft is reduced by this transmission stage. The sun gear being a first gearwheel is fixed to the first shaft and a second gearwheel is fixed to a part of the second shaft, in each case preferably by a torque-proof connection. At least one of the first and second gearwheel can be fixed to a respective shaft e. g. by means of at least one welding point or a welding seam connecting a seat on the shaft or by being integrally formed on the shaft. In other words, the transmission comprises a number of gearwheels. Furthermore, a gearwheel can be configured in a manner that a shaft can comprise at least one wheel structure comprising a toothing, in particular an outer toothing, which can rotate together with the shaft.

The second shaft has a bifid structure. In this respect, a first sub-shaft of the second shaft can be arranged in line with a second sub-shaft of the second shaft. The two sub-shafts should be arranged along a common constructional axis.

Another component of the drivetrain is a disconnect. The drivetrain can comprise at least one disconnect unit. Preferably, the disconnect belongs to the bifid second shaft. The disconnect parts the bifid second shaft into two sub-shafts, a first sub-shaft and a second sub-shaft.

The disconnect can be switched, e. g. by means of an actuator. The disconnect is particularly advantageous due to the fact that change of state is possible when torque is applied to the second shaft. A closed or locked disconnect can be arranged to be actuated into the disconnected state while a prevailing torque is introduced from the differential to the second shaft. For switching a state, connecting parts of the disconnect are moved apart such that transfer of torque between the first sub-shaft and the second sub-shaft is interrupted.

An introduced torque from the differential is present e. g. in a downhill operation or when a vehicle is driven by its inert mass. The disconnect is configured for a reaction on a prevailing torque coming from the differential. In a reaction or responsive to a prevailing torque transferred from the differential to the second shaft, the disconnect can change its state. A disconnected state of the disconnect represents an interrupted torque path along the second shaft. The prevailing torque may provide a driving force and/or provide generated energy (e. g. by driving an electric generator) for a transition of the disconnect into an interrupted state of the disconnect (e. g. by initializing a normally open spring and/or by a disconnect actuator).

The drivetrain also comprises a parking lock. The parking lock is preferably located on an output side of the transmission, in particular on the output side in respect of a drivetrain input arrangement for connecting an electric propulsion motor, wherein the transmission is following the electric propulsion motor.

Considering a possible flow of torque introduced by vehicle wheels along the first and/or the second output shaft, the parking lock is arranged in respect of an invertible direction of torque flow towards the disconnect unit before the disconnect.

The drivetrain arrangement for a vehicle is configured for an energy efficient vehicle design.

The first shaft can be an extension of a rotor shaft. The second shaft is a countershaft or a layshaft. The countershaft is laterally offset from the first shaft and preferably carries more than one gearwheel. Preferably, the second shaft carries less than four gearwheels or respective toothings. The differential of the drivetrain arrangement is arranged for being driven by the second shaft, in particular by a gearwheel of the second shaft. The two output shafts are arranged along an electric machine axis and preferably are arranged in line. A first output shaft of the output shafts extends coaxially through the rotor shaft.

The rotor shaft is a hollow shaft which surrounds a segment of the first output shaft, wherein the first output shaft is arranged as a centre shaft in respect to the rotor shaft. The first output shaft extends in particular beyond both ends of the rotor shaft.

In a particularly compact arrangement, the first output shaft coaxially arranged together with the first shaft is held in place by means of a common bearing arrangement inside a common drivetrain arrangement housing. The bearing arrangement ensures a permanent presence of a gap between the two shafts. The bearing arrangement can comprise ball bearings and/or roller bearings.

Roller bearings, which are also named cylinder bearings or cylindric roller bearings, provide run-out tolerance in an axial direction. A tapered roller bearing is a special type of roller bearing, which supports both axial and radial loads. Roller bearings can carry higher loads than ball bearings due to a larger contact area of a roller as compared to a ball.

The common bearing arrangement comprises a combination of bearings, wherein preferably a first bearing provides support in at least a first direction, such as an axial direction, and a second bearing provides support in at least a second direction, such as a radial direction. The first direction is in particular different from the second direction. It can also be said that the common bearing arrangement comprises two or more bearings, of which at least one bearing supports different rotatable transmission components, such as shafts or the planetary carrier or the differential cage, against each other. It is advantageous if at least one of the bearings directly supports one of the transmission components against a housing, such as a transmission housing or an electric machine housing. Preferably one of the bearings can indirectly support a transmission component against the housing by supporting a (first) transmission component against another (second) transmission component, both transmission components arranged in the same housing. The common bearing arrangement is a compact arrangement, which preferably comprises less than eleven bearings. It can also be said that a common bearing arrangement, in particular of shafts, comprises a plurality of bearings, of which at least one bearing carries loads originating from at least two transmission components, wherein the two transmission components are configured for rotation. A common bearing arrangement is a structural arrangement of bearings in a transmission.

When functional aspects of a common bearing arrangement are emphasized, the bearing arrangement can also be named an interrelated bearing arrangement. An interrelated bearing arrangement provides a compact and efficient transfer of dynamic forces from within an assembly space efficient configuration of a transmission in an, in particular electric, drivetrain and in particular from a transmission combined with a differential. Therefore at least some of the individual bearings can be less bulky than in conventional arrangements.

A first shaft bearing of the first shaft is arranged between the first shaft and the planet carrier.

A first carrier bearing, which is formed as a roller bearing, can be arranged along the first output shaft between a first shaft bearing and the first differential cage bearing. The first carrier bearing supports the planet carrier against the differential cage.

In a first state of operation of a drivetrain arrangement, an electric machine is provided with electric current. The machine being driven as a motor for propulsion of a vehicle generates torque. A first torque can flow "downstream" from a rotor of the electric machine through a gear stage to a differential and from the differential via output shafts to two of the road wheels. In a second state of operation, at least one road wheel can provide a second torque "upstream" towards the electric machine in an opposite direction of torque flow, wherein the electric machine is operated as an electric generator. In a third state of operation, namely in a freewheel state of operation, the drivetrain is interrupted by switching the disconnect arranged between the electric machine and the differential into an open position. In a fourth state of operation, namely in a hold state of operation, the road wheels at rest are blocked against further rotation by means of a parking lock. An engagement area of the parking lock is preferably arranged between the disconnect and the output shafts. The hold state is actuated via a parking lock mechanism. The fourth state of operation and the third state of operation can be established at the same time e. g. by a vehicle control unit. Thus with the parking lock in a closed position, the disconnect can be in an open position. The open position, in particular of the disconnect, is preferably a normally open position, which can be assumed, e. g. by a spring force, without applying any additional switching force.

With the drivetrain according to this invention, a parking state is independent from an actual status of the disconnect which is normally open and can be actuated in a closed state.

The inventive drivetrain arrangement provides various functionalities by means of a very compact design. The drivetrain arrangement is particularly useful for small vehicles and for vehicles which are designed for providing an effective interior space for optimal use, e. g. for extended storage capacity as well as for passenger comfort and safety.

The implementation of the parking lock and the disconnect in the drivetrain in general leads to a requirement for a larger installation space, which can be compensated to some extend by the very compact gear, shafts and bearing concept, which involves the common bearing arrangement.

Further advantages and benefits of the invention can be derived from the following explanations, which may bare additional inventive ideas by themselves.

The second shaft configured in a layshaft arrangement can be supported in a transmission housing by two bearings. Considering torque provided from the rotor shaft of the electric propulsion motor, the planetary gear-set is arranged upstream in respect of the second shaft. In other words, the planetary gear-set is a component of a reduction stage between the rotor shaft and the second shaft.

In respect of the common bearing arrangement, one bearing of the arrangement can be a first rotor bearing, which supports the rotor shaft. A second rotor bearing can support the rotor shaft in a rotor housing.

In the concept of a common bearing arrangement, the planet carrier is supported on one (first) side via a first carrier bearing on the differential cage. The first carrier bearing is preferably arranged along the first output shaft between the first shaft bearing and the first differential cage bearing. The first carrier bearing is preferably formed as a cylinder roller bearing having an inner ring and an outer ring. The inner ring of the first carrier bearing is seated on the differential cage. The outer ring of the first carrier bearing is inserted in a bearing seat of the planet carrier, preferably underneath a gearwheel fixed to the planet carrier or underneath a gear toothing of the planet carrier, wherein respective toothings are engaged with the second gearwheel. This arrangement supports against lateral forces generated from driving the second gearwheel.

The planet carrier is supported on the other (second) side, which preferably is facing the electric propulsion motor, via a second carrier bearing. The second carrier bearing can be seated with an inner ring of the bearing around an extension of the planet carrier in an axial direction towards the electric propulsion motor. An outer ring of the second carrier bearing is preferably seated in the transmission housing or in a component of the transmission housing. The second carrier bearing is preferably a ball bearing. The arrangement of first and second carrier bearings provides a particularly compact support for maintaining an alignment of the planet carrier along a rotor axis.

The differential is preferably supported by and arranged between the two differential cage bearings, which are both configured as tapered roller bearings. The differential cage is supported against the transmission housing or a component of the transmission housing. Lateral forces introduced to the differential cage from a driving arrangement via the second shaft are absorbed via the differential cage bearings. The tapered differential cage also stabilize the differential cage position in an axial direction against axial forces, which can be introduced from the two output shafts.

The bearing seat of the planet carrier is configured to carry two bearings, one of which is the first carrier bearing. The other bearing of the two bearings surrounded by the bearing seat is the first shaft bearing. The first shaft bearing can also be named sun gear bearing. The first shaft bearing is preferably a ball bearing. The sun gear bearing is located between the sun gear and the planet carrier. The sun gear bearing (or first shaft bearing) is configured to take the loads, predominantly the axial loads, acting the sun gear. The sun gear and the first shaft can be configured as one component being the driving component of the reduction stage.

In an alternative embodiment, the ball bearing can be mounted with a radial clearance. The radial clearance is a gap between an outer ring of the first shaft bearing and the bearing seat of the planet carrier. The gap can be configured for providing lubricant to the bearing. This gives the first shaft comprising the sun gear together with the planet carrier the freedom for centering based on the loads from the set of planetary gears. With this radial clearance the sun gear, in particular its position, is not over-determined, which can be advantageous for reduced wear and lifetime. For keeping the outer ring of the first shaft bearing in a place, the outer ring of the ball bearing can be held in one or two O-Rings. The O-rings can be made of hydrated nitrile rubber (HNBR) or a suitable type of fluorinated rubber.

A first bearing of the first output shaft can be arranged near the output side of the electric propulsion machine and a second bearing of the first output shaft can be arranged on the opposite side of the electric propulsion machine, in particular at a distance from electric propulsion machine which is larger than the distance of the first bearing of the first output shaft. Through this bearing arrangement, the first output shaft has a particularly stable orientation in respect of the rotor shaft. Therefore the gap between the two shafts can have a width between 2 mm and 20 mm.

The drivetrain can comprise at least one disconnect unit. The disconnect unit is arranged on the countershaft. The disconnect unit can be supplied with forces or commands for switching states. One of the states is a connection state.

The disconnect unit comprises the disconnect and an actuation mechanism, preferably comprising an actuator.

The disconnect can be described as an interconnect arrangement around the first sub-shaft and around the second sub-shaft. In one state of operation, which can be named an open state or a disconnect state, the disconnect allows relative rotational motion, e. g. different rotational speeds, of the two segments or sub-shafts of the second shaft. In another state of operation, the disconnect forms a torque-proof connection between those segments or sub-shafts of the second shaft. The connection can also be named a bridge for torque transfer. This state can be named closed state. When the disconnect has assumed the closed state, no relative rotation between the two segments or sub-shafts of the second shaft is possible.

The disconnect can be designed such as it comprises an intermediate state. The intermediate state is a transition state between an open state and a closed state of the disconnect. In the intermediate state, friction from rotational speeds between the first sub-shaft and the second sub-shaft is allowed within a narrow time slot of e. g. less than five seconds, preferably less than one second. Different rotational speeds between the first sub-shaft and the second sub-shaft of the second shaft can be synchronized. Synchronization guarantees a smooth transition between different states of the disconnect unit.

The disconnect can be a switchable unit, which comprises at least two components. Both components are preferably mounted on the second shaft between shaft bearings located at the second shaft ends. The bifid second shaft comprises a shaft connection area between the two shaft segments, a first shaft segment and a second shaft segment, which can also be named sub-shafts respectively. The disconnect surrounds an intersection or a gap of the second shaft. The gap can be an interstice located in an overlap region of the two sub-shafts. In other words, the gap is preferably a circumferential gap that is delimited in a radial direction by the first sub-shaft and by the second sub-shaft. An inner diameter of the second sub-shaft is larger than an outer diameter of the first sub-shaft in the overlap region of the two shaft segments. The gap can be filled at least in part by at least one roller bearing. The gap can be longer than the second shaft segment but preferably the gap is shorter than the first shaft segment. At least one component of the disconnect can be moved in an axial direction along the second shaft. The at least two components of the disconnect are in particular not separately rotatable around the second shaft. Therefore direct transfer of torque from a sub-shaft to at least one of the two components of the disconnect is possible.

At least one, preferably two, locking component(s) of the parking lock can be arranged on the second shaft or on the differential. The parking lock is preferably located at a distance from the differential gearing or from a planetary gearing, in particular outside of a differential cage.

One of the components of the disconnect, preferably a component located in proximity of a side of the second shaft, which is oriented towards the differential for driving the differential, can be equipped with a toothing. The teeth can be integrally formed on the outside of the disconnect. The teeth preferably protrude radially in respect of the second shaft. The toothing comprises a number of preferably equidistant teeth with equal size. The toothing can belong to a ring gear mounted on a part of the disconnect, which is immobile in respect of the second shaft. The teeth are formed and arranged for engagement with the parking lock mechanism. In other words, at least one sub-shaft or one segment of the second shaft or one part of the disconnect can be immobilized by means of the parking lock mechanism being engaged with said toothing. The disconnect in combination with the toothing provides a very compact arrangement for control of the drivetrain.

The disconnect located in the gap region of the bifid second shaft, is operable as a connect unit on demand, e. g. by means of a vehicle control unit. With the disconnect in an open position and with the parking lock in a locked position, one of the sub-shafts of the second shaft, preferably the sub-shaft which is further away from the differential than the other sub-shaft, can be rotated by the electric machine, in particular with no effect on the motion of the parked vehicle. Therefore the vehicle remains in an immobile, safe state.

With the disconnect being in a connect state that is a closed state of the disconnect and the parking lock being in an open position, a vehicle equipped with the drivetrain can be accelerated by the electric propulsion motor. Furthermore, the electric propulsion motor can be operated as an electric generator, e. g. when the vehicle has a velocity, e. g. by moving downhill. The vehicle can be slowed down by the electric generator and electric energy is recuperated for transient storage in a capacitor or in an electrochemical storage device, such as a battery pack, of the vehicle.

When the disconnect is in an open state and the parking lock mechanism is not engaged, i. e. the parking lock being open, the vehicle can keep rolling without using electric energy for propulsion. In this state, energy loss due to friction is smaller than with the disconnect being closed or being in connect state. This state may also be useful if an unexpected vehicle or drivetrain fault occurs. A running electric propulsion machine can be decoupled by the disconnect and motion of the vehicle can be braked down with wheel brakes without the need to absorb the kinetic energy present in the transmission and in the electric propulsion motor in the brakes.

In a particularly advantageous arrangement of a drivetrain, the second shaft can be offset and extend sideways parallel to the first shaft. The first shaft and the second shaft are preferably oriented in a transverse direction of a vehicle, when the drivetrain is installed in the vehicle the second shaft can carry at least two gearwheels. A gearwheel can be fixed to a shaft or to a hub or to a mounting bracket.

In another advantageous embodiment, at least one of the gearwheels, such as a second gearwheel and/or a third gearwheel, can be integrally formed as a section of the bifid second shaft. The first shaft and/or the second shaft can be a hub or a rotational centre of a gear(wheel).

A first gearwheel such as a driven gearwheel can belong to a first shaft segment of the second shaft. A second gearwheel, such as a driving gearwheel can be arranged on a second shaft segment of the second shaft.

Preferably at least one needle bearing is arranged in the gap between the first segment and the second segment of the second shaft. The needle baring can be enclosed in an overlap region of the bifid second shaft. With this arrangement, the two segments or sub-shafts of the second shaft support each other and lateral forces can be diverted to end side bearings, such as a first and a second end-side bearing, of the bifid second shaft.

The disconnect can be a device, which can assume at least two states, the states being switch positions of axially or radially movable parts of the disconnect, in particular limit stop positions. The disconnect preferably comprises a normally open clutch. The normally open clutch can be held open by spring force. For example a laminated spring can hold two engagement parts or disks of the clutch apart. With a normally open clutch, accidental speed up of a vehicle due to system failure is almost impossible. Particularly advantageous clutches for efficient energy transfer in the drivetrain arrangement are dog clutches or toothed clutches. Preferably the disconnect comprises a synchro-sleeve clutch. The synchro-sleeve clutch allows particularly smooth operation of the disconnect through synchronization of rotations prior to clutch engagement. Closing of the clutch can be brought about by an actuation force provided by an actuator, such as a solenoid or a hydraulic piston/cylinder arrangement.

The disconnect can be switched from a disconnected state to a coupled state, and vice versa. The coupled state can be named torque transfer state. The disconnected state can be named torque interrupt state.

The first gearwheel or the second gearwheel can be brought in a freewheel state by means of the disconnect and preferably the other one of the first and second gearwheels is fixed for rotation together with respective shaft segment.

Particularly safe operation of the disconnect is achieved by a disconnect being configured with a load switching operation clearance. Said clearance can be considered as a difference between a tooth width and a tooth gap width being larger than the tooth width. Preferably the difference is less than a half tooth width. Quick and smooth engagement can be achieved when all teeth have the same tip angle, wherein the tip angle has preferably a defined value from an angular range of 20° to 45°.

The differential is preferably arranged around the electric propulsion motor axis. The differential can comprise a cage, which may be arranged with rotational symmetry around said axis.

The cage can enclose bevel gears of the differential and one end of e. g. two output shafts respectively. The cage, which can also be named a basket, can have an outside structure comprising a number of teeth. An outside toothing around the cage can have a circular arrangement, which is configured for being driven by a toothing connected with the second shaft. Therefore the toothing is arranged in a constructional plane which has a rectangular orientation in respect of the output shafts. From a different perspective in view of constructional elements of an advantageous design, a gear(wheel) of the second shaft can be engaged with an outer gear(wheel) of the differential. Both gear(wheel)s are preferably spur gears. One of said gear(wheel)s can drive the other gear(wheel) depending on the state of operation of the drivetrain. This arrangement is a very compact design for torque transfer.

A second row of teeth may exist parallel to the first row of teeth around the cage of the differential. The second row of teeth preferably has a smaller number of teeth than the first row. The second row of teeth may be driven by another shaft or by another gearwheel. Preferably this second toothing on the cage comprises more solid teeth than the teeth of the first row. The second toothing may be provided for interaction with a protrusion of a parking lock. An activated parking lock can inhibit any rotation of the cage.

A very favourable location of at least some (e. g. two) of the engagement parts of the parking lock is beyond the disconnect and pre-located in respect of the output shafts, in particular when considering a direction of torque flow coming from the electric propulsion motor. Preferably all components of the parking lock are arranged at a distance, in particular in an off-axis direction, from the output shafts. The parking lock can comprise engagement parts and actuation parts, such as an actuation mechanism and an actuator.

The parking lock can be pre-arranged in respect of at least one component of the disconnect unit, or in particular pre-arranged in respect of a first bearing of the second shaft, which is nearer to the electric propulsion motor than a second bearing of the second shaft. The term "pre-arranged" means that in a direction of torque flow via the output shafts towards the disconnect, i. e. torque introduced by road wheels, the parking lock is located before the disconnect. Thus the parking lock can inhibit any vehicle movement in forward or in backward direction. In other words, the parking lock is preferably arranged between the first shaft and the output shafts and pre-arranged in respect of the transmission of the drivetrain, which may allow reverse torque flow in a free rolling vehicle.

In yet another embodiment, the parking lock can be arranged adjacent to the second shaft. A toothing of the parking lock is preferably formed around the second shaft. The toothing can comprise twelve teeth, in particular between six and twenty teeth so that locking can occur at different rotation angles, e. g. of the second shaft.

When the parking lock wheel or the parking lock, in particular a rotatable component of the parking lock, is located in an area delimited by two constructional planes crossing two differential cage bearings, the parking lock is particularly stable. In this configuration, forces for holding against rotation can be dissipated over the bearings with only little leverage. The two planes are preferably parallel to each other and in particular perpendicular to an axial direction of the output shafts.

The parking lock can comprise a locking mechanism. A first part of the locking mechanism, like an engaging part or a parking wheel, can have a torque-proof connection with the second shaft or with a differential cage. A second engagement part of the locking mechanism can be fixed, preferably supported inside a gearbox. Such an engagement part can be a ratchet or a pawl that can be pivoted by an actuator. At least one of the engagements parts, like a ratchet or a pawl, is supported such that it can assume an engagement position with the other engagement part, for example by being moved towards the other engagement part and establishing a form-fit arrangement.

The parking lock and/or the disconnect can by hydraulically activated and/or electromagnetically controlled units. Both units can be switched through their respective actuator controlled by respective dedicated activation circuits.

The parking lock and the disconnect can be mounted in neighbouring positions. For example, a locking wheel of the parking lock can mounted opposite to a part of the disconnect that is fixed for rotation together with the second shaft, at least with a sub-shaft of the second shaft. In other words, an engagement part of the parking lock, in particular a component of the parking lock, can also be a part of the disconnect, but preferably is not used for engagement of the disconnect. With such an arrangement, assembly space is efficiently used.

An even more compact drivetrain arrangement can be provided when a first one of the output shafts extends along the first shaft. The two shafts can form a coaxial arrangement with the first shaft being an outer shaft. The first output shaft preferably reaches from the differential through the electric propulsion motor, in particular through the rotor shaft of the motor. A first end of respective output shaft can be connected with the differential, in particular with a first bevel gear of the differential such that the output shaft can be driven through the differential. A second end of the first output shaft can be located at a distance from the electric propulsion motor and in particular opposite to an output side of the electric propulsion motor. A second output shaft, which is connected with a second bevel gear of the differential, is preferably in line with the first output shaft. Both output shafts can be driven simultaneously by the electric propulsion motor.

The rotor shaft and the first output shaft can be supported by the common bearing arrangement. The first output shaft and the rotor shaft are preferably held in place by means of at least two roller bearings. Additional support of the coaxial shaft arrangement can be provided by a support structure of an, in particular common, housing of the drivetrain arrangement.

The first output shaft can be longer than the first shaft and in particular longer than the rotor shaft. The first shaft is a hollow shaft. In the case that the first shaft is an extension of the rotor shaft, both shafts are hollow shafts. Both shafts can be connectable via a torque-proof plug-in connection. The common bearing arrangement can structurally sustain that connection. The first output shaft is preferably longer than the second shaft and in particular longer than the second output shaft.

The bearings of the common bearing arrangement are preferably aligned in respect of a (common) "zero edge", wherein the zero edge refers to a side of the housing.

A gap between the rotor shaft and the first output shaft can be used for exchange of fluids between both sides of the electric motor and provide equalization of air and/or lubricant pressure. In other words, the gap is a shaft gap that is preferably a circumferential gap delimited in a radial direction by the rotor shaft and by the first output shaft.

The rotor shaft can have a conical inner diameter, in particular in a limited region between one end and the opposite end of the shaft. The inner surface of the hollow rotor shaft can be a polished surface and/or be covered with a layer of a lubricant repellent material and/or be fabricated with a scaled and/or coiled surface structure in order to facilitate lubricant transport in a preferred direction of flow.

The electric propulsion motor, the gearing of the transmission, the disconnect, the parking lock and sections of the output shafts can be arranged in a common drivetrain housing. The housing provides support and protection for those components of the drivetrain. The housing comprises structural elements for mounting the housing in a vehicle, e. g. in a chassis of a vehicle. The housing can comprise inner structural elements for support of shaft bearings.

The cage of the differential can be supported, e. g. inside a drivetrain housing, by two tapered roller bearings. The output shafts reach in particular through the tapered roller bearings of the differential cage.

The second shaft can be a hollow shaft. The second shaft is preferably supported by two (a first and a second) tapered roller bearings located respectively at the ends of the second shaft, in particular at both ends of the first sub-shaft. An inner diameter of the hollow shaft at a first end can be larger than an inner diameter at a second end. In this respect, when the first end belongs to a first sub-shaft, and the second end belongs to the second sub-shaft, the first sub-shaft may have a larger maximum outer diameter than the second sub-shaft. The first sub-shaft or the first component of the second shaft can be engaged with the differential cage through a toothing of the first sub-shaft or of the first component of the second shaft. With this structure, the second shaft can be very stable and still have a considerably low mass. The second sub-shaft can be integrally formed together with a gearwheel, which can be engaged with a gearwheel of an initial reduction gear system such as a planetary gear system.

The planetary gear system can comprise a carrier toothing connected with a carrier. The carrier can transmit an input torque to the second shaft over a first spur wheel section of the carrier comprising the carrier toothing. As an alternative, a toothed wheel may be connected with the carrier o a common rotational axis. The toothed wheel may be engaged with a gearwheel sitting on the second sub-shaft or on a second component of the second shaft.

A torque provided by the electric propulsion motor over the first shaft to a sun gear on the first shaft that is engaged with a plurality of planetary gears supported by the carrier can be transferred to the second shaft. A hollow gear of the planetary gear system is preferably grounded on the housing.

Particularly advantageous features of the drivetrain arrangement can also be described in the following way.

The drivetrain comprises a disconnect unit, which allows to disconnect the wheels from the motor. With a disconnected, motor energy can be saved when a vehicle is e. g. running at higher speeds, in particular when those speeds should not be upheld.

The disconnect is arranged at a distance from the differential. With the disconnect being outside of the differential, installation of a safe parking lock system on the drivetrain is facilitated.

The drivetrain can have an extra shaft, which is parallel to the other shafts of the drivetrain. The extra shaft can also be named second shaft. Having this extra parallel shaft allows the placement of both items, namely parking lock and disconnect, on the extra shaft and in particular in a neighbouring position. Easy access to the actuators, e. g. by means of a hydraulic system using short connecting tubes, is possible. The design allows an axially short overall assembly.

In a preferred arrangement, the output shafts are concentric to a motor axis.

It can also be said that the motor drives a planetary reductor. The planetary reductor is a transmission stage which comprises at least one sun gear, at least one planet carrier supporting preferably a number of planetary gears, and at least one ring gear. The ring gear can be fixed to a transmission housing. The planet carrier is connected to a gear, which meshes with a (second) gear on a (second) shaft, wherein the (second) shaft is arranged parallel to a rotational axis. The rotational axis extends through the planet carrier and through the motor. This gear can be disconnected from the parallel shaft using a suitable installed coupling system. The parallel shaft has another gear, which meshes with a wheel connected to a differential housing. A park lock wheel can be located on the parallel shaft or on the differential housing. A suitable position for placing the park lock is between the wheels and the disconnect.

The transmission housing supports components of the transmission such as bearings, shafts, gear wheels and actuation mechanisms. The transmission housing includes a lubrication reservoir, which can be separate from a housing of the electric propulsion motor. Both the transmission and the motor can be accommodated together in one housing such as a housing providing a chamber for the transmission and a chamber for the motor.

With the described system or arrangement, a required reduction ratio can be provided in a compact package. Preferably a planetary gear outer diameter and final drive wheel outer diameter are within a motor housing diameter. The disconnect can be located after the park lock and thus significantly improve the safety of the arrangement. In this respect, a sequence of arrangement from wheels to electric propulsion motor such as wheels followed by differential followed by park-lock followed by disconnect followed by a motor (or an electric machine, which can as well be operated as an electric generator) is of particular advantage. The motor is preferably concentric with the output shafts.

Furthermore, combinations and examples described before can be considered in numerous combined arrangements, embodiments and working examples.

For example in a respective arrangement, the motor-output shafts can be non-concentric in respect of output shafts, which allow more space available for high speed motor bearings.

A disconnect mechanism can be designed as a space efficient electromagnetic normally open toothed clutch or a hydraulic actuation clutch or a fork and syncro sleeve. The state of the disconnect can be measured with a contactless, electromagnetic sensor arrangement.

The transmission can be described as a two stage transmission plus differential. One stage of the transmission, preferably a spur gear transmission stage, can be a gear switch transmission, providing at least a first speed reduction and a second speed reduction. With this configuration, further improved driving characteristics and efficiency can be provided.

By other words and from another perspective, the drivetrain for a vehicle with an electric propulsion motor, which has a rotor shaft, comprises a transmission. The transmission has at least a hollow first shaft and a bifid second shaft. The second shaft is a counter shaft of the first shaft. The drivetrain comprises a parking lock and a differential. Two output shafts are connected with the differential and form outputs of the differential. The differential outputs torque for road wheels via the output shafts. Rotational speed of the first shaft is reduced by a transmission stage formed by at least two gearwheels, a first gearwheel fixed to the first shaft and a second gearwheel fixed to the second shaft, and a planetary transmission. A disconnect is part of the bifid second shaft, which is arranged to be switched into a disconnected state while a prevailing torque is introduced from a secondary side. The secondary side is preferably the side of the transmission, which is not directly connected with the rotor shaft. The first shaft and the rotor shaft are connected with each other and supported in a coaxial shaft arrangement by a common bearing arrangement. The common bearing arrangement can be described as an arrangement of two or more than two bearings, which supports two or preferably more than two shafts, of which two shafts are arranged in a coaxial manner and the bearing arrangement keeps the distance between the coaxial shafts.

The arrangement of the parking lock and the disconnect on the second shaft, when the parking lock is at an output side of the second shaft, which is provided by the respective sub-shaft and which by means of the disconnect can be coupled to the other sub-shaft carrying the second gearwheel, ensures that there is no danger of interfering the safe parking lock functionality by the disconnect.

The arrangement can be equipped with an active lubrication system comprising e. g. a pump and a cooler.

With such an advantageous drivetrain, an energy efficiency of up to 95 % can be achieved. Typical weight of an e-axle at a typical rated gearbox output torque of about 2400 Nm can be about 15 kg.

### Brief description of figures

The understanding for present invention can be further enhanced by referring to the following figures which may show additional advantageous aspects within configurations and arrangements as well as inventive aspects by themselves, wherein
figure 1 shows a schematic of components of a drivetrain arrangement,
figure 2 shows the assembled arrangement of the drivetrain of figure 1 in a side view,
figure 3 shows a cross-sectional view of the arrangement of figure 2,
figure 4 shows a view of the arrangement of figure 2 in an axial direction,
figure 5 shows a schematic of components of another drivetrain arrangement,
figure 6 shows the assembled arrangement of the drivetrain of figure 5 in a side view,
figure 7 shows a cross-sectional view of the arrangement of figure 6,
figure 8 shows a view of the arrangement of figure 6 in an axial direction,
figure 9 shows a modified section A marked in figure 7, which is an advanced design of a common bearing arrangement.

### Description of figures

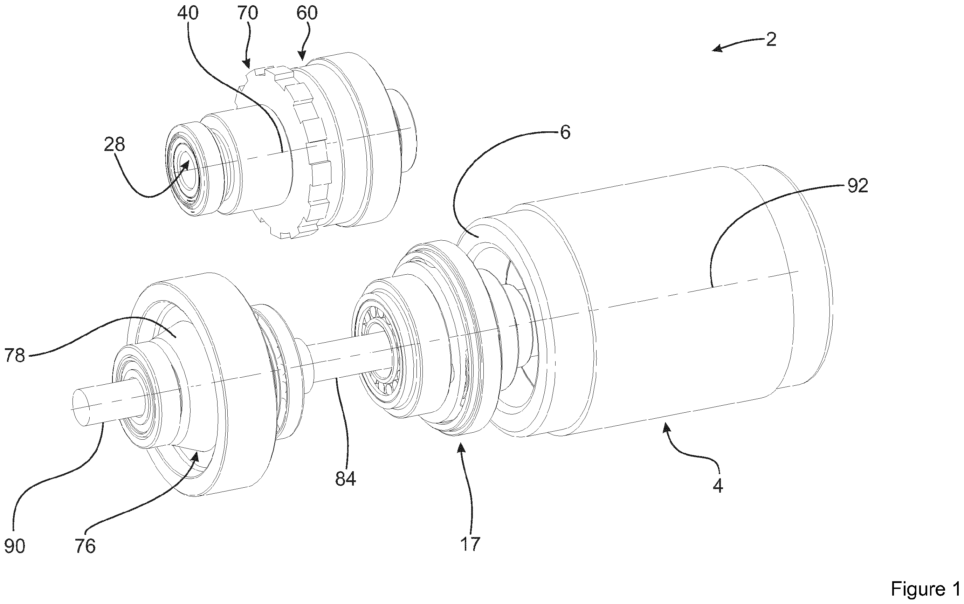

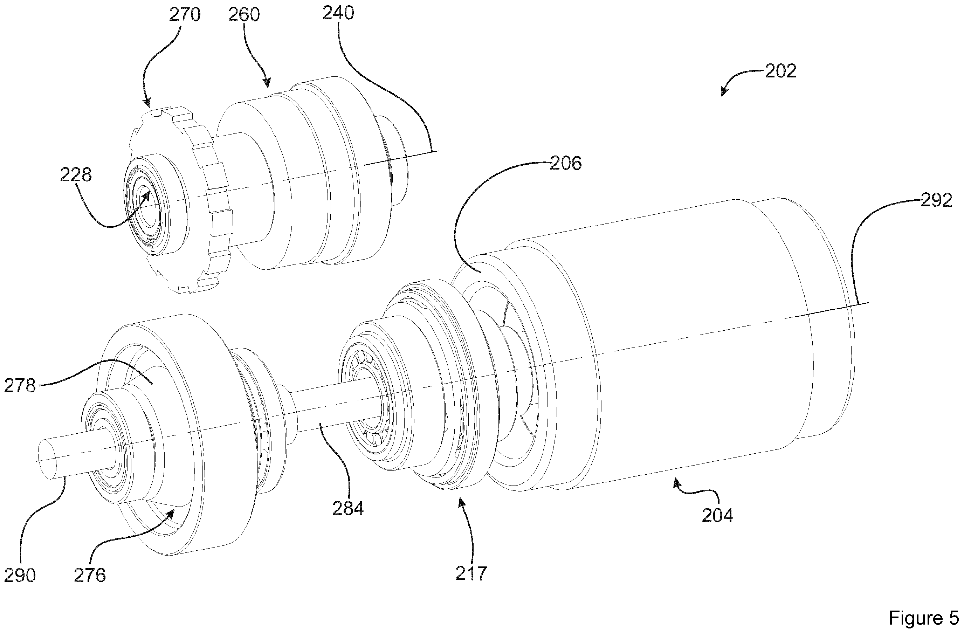

Figure 1, figure 2, figure 3 and figure 4 are different representations of a first embodiment of a drivetrain arrangement 2 for an electric vehicle. Figure 5, figure 6, figure 7 and figure 8 are different representations of a second embodiment of a drivetrain arrangement 202 for an electric vehicle. Those two embodiments have many structural similarities and therefore will be discussed together in the following. Differences between the two embodiments will be explained in separate paragraphs.

Figure 1 and figure 5, respectively, show a schematic of different components of a respective drivetrain arrangement 2, 202 in the neighbourhood of an electric propulsion motor 4, 204. A first output shaft 84, 284 and a second output shaft 90, 290 of the drivetrain arrangement 2, 202 are both protruding from a differential 76, 276 comprising a basket 78, 278. The two respective output shafts 84, 90, 284, 290 are collinear along an output shaft axis 92, 292. The electric propulsion motor 4, 204 is centred on the output shaft axis 92, 292. A planetary gear system 17, 217 is arranged around the first output shaft 84, 284 between the output side 6, 206 of the electric propulsion motor 4, 204 and the differential 76, 276. The planetary gear system 17, 217 can also be named a first stage of the transmission of the drivetrain 2, 202. An axis 40, 240 of a second shaft 28, 228 is drawn parallel and with an offset sideways from the output shaft axis 92, 292. A disconnect 60, 260 and a parking look wheel 70, 270 are arranged on the second shaft 28, 228. The disconnect 60, 260 as well as the parking look wheel 70, 270 can be described as having an approximately cylindrical outer shape, which is oriented along the second shaft 28, 228 or along respective axis 40, 240 with a rotational symmetry in respect of its moment of inertia around the axis 40, 240.

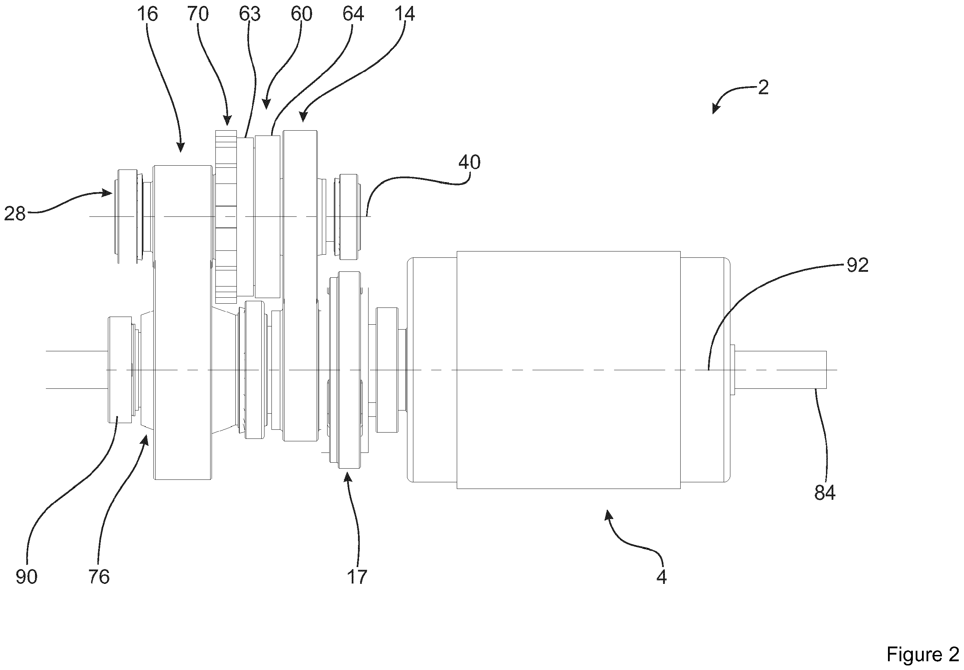

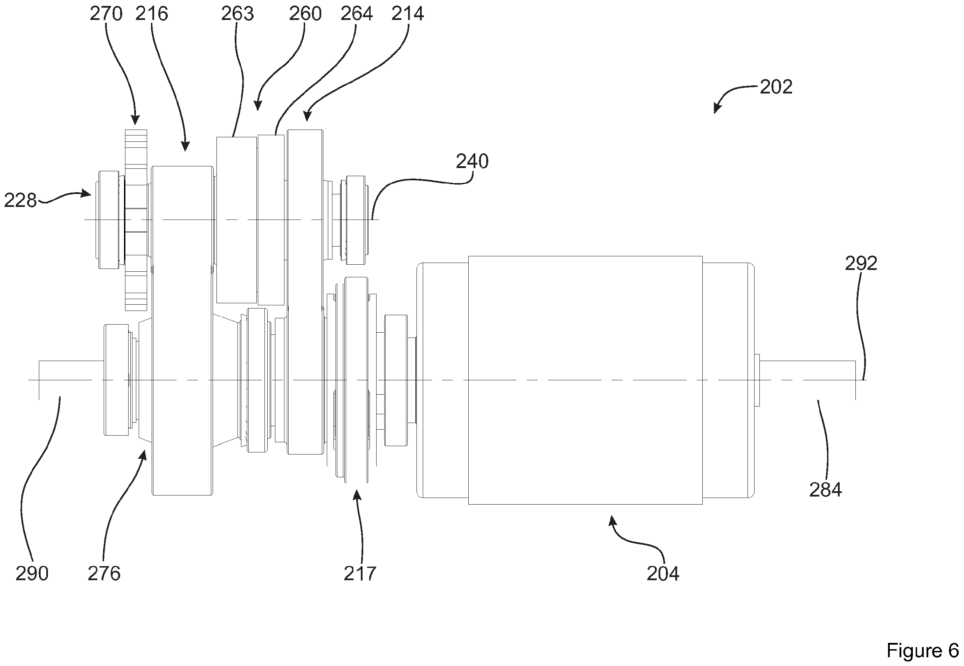

Figure 2 and figure 6 show respective drivetrain arrangements 2, 202 in an assembled state and inserted in the electric propulsion motor 4, 204. The first output shaft 84, 284 reaches from the differential 76, 276 all the way through the planetary gear system 17, 217 and through the electric propulsion motor 4, 204. The first output shaft 84, 284 is pointing in an opposite direction as compared to the second output shaft 90, 290 along the output shaft axis 92, 292. The planetary gear system 17, 217 is followed by a first transmission stage 14, 214. The first transmission stage 14, 214 crosses the output shaft axis 92, 292 and the axis 40, 240 through the second shaft 28, 228 in a rectangular manner. The two respective axes 40, 92; 240, 292 of the drivetrain arrangement 2, 202 are parallel to each other.

The disconnect 60, 260 comprises a fixed part 63, 263 and another part 64, 264, with a component that is mobile along the second shaft axis 40, 240, which can be abbreviated as mobile part 64, 264. A second transmission stage 16, 216, which follows the first transmission stage 14, 214 (in a direction away from the planetary gear system 17, 217 and further away from electric motor output side 6, 206) connects the second shaft 28, 228 with the differential 76, 276. The two transmission stages 14, 16; 214, 216 are configured to transmit torque provided by the electric propulsion motor 4, 204 to the second shaft 28, 228 and further on to the output shafts 84, 90; 284, 290.

At least one of the two transmission stages 14, 16; 214, 216 can be embodied as a spur gear stage.

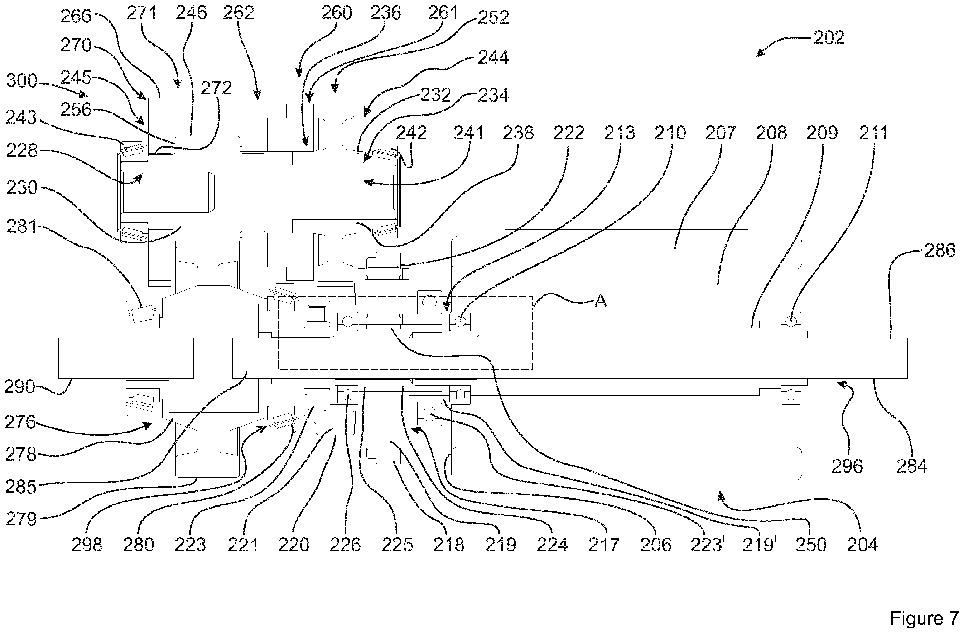

The drivetrain arrangement 2 shown in figure 2 differs from the drivetrain arrangement 202 shown in figure 6 in that the parking lock wheel 70 according to figure 2 is arranged on the fixed part 63 of the disconnect 60. In contrast, the parking lock wheel 270 according to figure 6 is an entity which is separate from the fixed part 263 of the disconnect 260 and therefore is placed on a different location along the second shaft 228 than the disconnect 260. The parking lock wheel 270 is fixed on the second shaft 228 following the second transmission stage 216 (in a direction away from the planetary gear system 217 and further away from electric motor output side 206). The parking lock wheel 70 shown in figure 2 is arranged on the second shaft 28 between the first transmission stage 14 and the second transmission stage 16. The drivetrain arrangement of figure 2 therefor is more compact in an axial direction than the drivetrain arrangement 202 of figure 6. However the drivetrain arrangement 202 of figure 6 has the advantage that the parking lock wheel 270 is supported close to an end of the second shaft 228 (see also a bearing 243 of figure 7) and therefore can better dissipate any holding forces.

The differences of the two arrangements of drivetrains 2, 202 can be seen even better when the cross-sectional views of figure 3 and of figure 7 are studied side by side. The drivetrains 2, 202 comprise a transmission 100, 300 and an electric propulsion motor 4, 204. The transmission 100, 300 comprises two transmission stages ( see first transmission stage 14, 214 and second transmission stage 16, 217 in figure 2 and figure 6 respectively). Components of the transmission 100, 300, such as the first shaft 24, 224 and the second shaft 28, 228 and respective arrangements, are described in more detail in the following.

According to figure 3, a first engagement part 71 (facing a not shown second engaging part of a parking lock) comprises a ring arrangement of outer teeth such as tooth 66, thus forming a parking lock wheel of the parking lock 70. The parking lock wheel 70 is a structural element of the disconnect 60, in particular of a second component 62 of the disconnect 60. The second component 62 with respective teeth 66 has a torque-proof connection 72 with the second shaft 28. The first component 61 of the disconnect 60 represents a switchable part of the disconnect 60 on the second shaft 28. Therefore the parking lock wheel 70 and the disconnect 60 are arranged on the second shaft 28 adjacent to each other in a very compact manner. The parking lock wheel 70 and the disconnect 60 are located between a second gearwheel 52 and a toothing 46 on the second shaft 28. Different from this arrangement shown in figure 3, the drivetrain arrangement 202 of figure 7 has a parking lock wheel 270 arranged on the second shaft 228 at a distance (which is less than half of a length of the second shaft 228) from the disconnect 260, in particular from its first 261 and second 262 component. toothing 246 exists on the second shaft 228 between the disconnect and the parking lock wheel. The parking lock wheel 270, being a first engagement part 271 (facing a not shown second engaging part of the parking lock), has a torque-proof connection 272 to the second shaft 228 near an output side 245 of the second shaft 228. The parking lock wheel 270 is located between a second tapered roller bearing 243 of the second shaft 228 and the toothing 246 on the second shaft 228, being an integrally formed gearwheel 256.

In an alternative embodiment, the toothing on the second shaft 46, 246 can belong to a gearwheel being manufactured as a separate entity that is fixed, e. g. through welding or soldering, on the second shaft. Furthermore, in another alternative embodiment of a drivetrain arrangement such as drivetrain arrangement 202, the parking look wheel can be one side of a stepped gearwheel, of which the opposite side has a toothing, which belongs to the second transmission stage.

However, the (third) gearwheel 56, 256 of the second transmission stage 16, 216 and the parking lock wheel 70, 270 are fixed on the second shaft 28, 228, in particular on the first sub-shaft 30, 230 of the second shaft 28, 228, in a torsion-proof manner.

Furthermore, in the drivetrain 202 as shown in figure 7 similar to the drivetrain 2 shown in figure 3, the disconnect 60, 260 is arranged on the second shaft 28, 228 between the second gearwheel 52, 252 and the toothing 46, 246. In other words, the disconnect 60, 260 comprising the two components 61, 62; 261, 262 is arranged between the first sub-shaft 30, 230 and the second sub-shaft 32, 232 of the second shaft 28, 228. The second gearwheel 52, 252 belongs to the second sub-shaft 32, 232, in particular being one (integral) component.

In an alternative embodiment, the second gearwheel is fixed on the second sub-shaft by means of welding, thus forming one (joined) component.

The second sub-shaft 32, 232 is arranged around the first sub-shaft 30, 230 with a segment overlap 36, 236 and with a gap 34, 34^{I}, 234. The overlap 36, 236 region can also be named an intersection 36, 236. A needle bearing 38, 238 located in the gap 34, 234 between the first sub-shaft 30, 230 and the second sub-shaft 32, 232 allows independent rotation of the second sub-shaft 32, 232 together with the second gearwheel 52, 252 around the first sub-shaft 30, 230. A first tapered roller bearing 42, 242 near an input side 44, 244 of the second sub-shaft 28, 228 and the second tapered roller bearing 43, 243 near the output side 45, 245 of the second shaft 28, 228 support the first sub-shaft 30, 230 for rotation inside of a housing (not shown). Between the two tapered roller bearings 42, 43; 242, 243, the needle bearing 38, 238 supports the second sub-shaft 32, 232 on the first sub-shaft 30, 230. Therefore three bearings 38, 42, 43; 238, 242, 243 are arranged around the second shaft 28, 228, respectively.

When the disconnect 60, 260 is an open position, the second sub-shaft 32, 232 can freely rotate on the first sub-shaft 30, 230. In the open state of the disconnect 60, 260, transfer of torque between the input side 44, 244 and the output side 45, 245 of the second shaft 28, 228 is interrupted. In a close state of the disconnect 60, 260 any torque introduced from the electric propulsion motor 4, 204 on the second shaft 28, 228 can flow from the input side 44, 244 to the output side 45, 245. Also torque introduced via output shafts 84, 90 can flow in an opposite direction towards the electric motor 4, 204. The second shaft 28, 228 is a hollow shaft 41, 241, which is wider on the output side 45, 245 as compared to the input side 44, 244. Therefore there is good stability against forces acting near the output side 45, 245, which can be stronger than forces acting near the input side 44, 244 of the second shaft 28, 228.

Energy, speed and torque can be provided to the drivetrain 2, 202 by the powered electric propulsion motor 4, 204. The electric propulsion motor 4, 204 comprises a stator 7, 207 with an inner rotor 8, 208. The rotor 8, 208 is fixed on a rotor shaft 9, 209, which is supported by a first rotor bearing 10, 210 and a second rotor bearing 11, 211, which are both formed as ball bearings. The rotor shaft 9, 209 is a hollow shaft, which extends beyond the output side 6, 206 of the electric propulsion motor 4, 204. An overlap 13, 213 exists between the rotor shaft 9, 209 and a first shaft 24, 224 of the drivetrain 2, 202, which facilitates mounting of the electric propulsion motor 4, 204 on the planetary gear system 17, 217 in a torque-proof manner. The first shaft 24, 224 is also a hollow shaft 25, 225.

The first output shaft 84, 284 has a first end 85, 285 connected to the differential 76, 276. The first output shaft 84, 284 reaches through the connected hollow shafts 25, 225, 9, 209. A second end 86, 286 of the first output shaft 84, 284 is located outside of the electric propulsion motor 4, 204. Thus the three shafts 84, 284, 24, 224, 9, 209 are in a coaxial arrangement 96, 296.

The first shaft 24, 224 carries a first gearwheel 50, 250, which is a sun gear 50, 250 of the planetary gear system 17, 217. The sun gear 50, 250 is engaged with planet gears such as the planet gear 22, 222. The planet gears 22, 222 can roll inside a ring gear 18, 218, which is fixed to a housing (not shown). All planet gears such as the planet gear 22, 222 are supported for rotation by a planet carrier 19, 219. The planet carrier 19, 219 is connected in a torque-proof manner with a toothed wheel 21, 221 having an outer toothing 20, 220.

In an alternative embodiment, the planet carrier can be formed with an outer toothing such as the outer toothing 20, 220.

The outer toothing 20, 220 is permanently engaged with the toothing of the second gear wheel 52, 252 arranged on the second shaft 28, 228. The second shaft 28, 228 is offset sideways from the first shaft 24, 224. It can also be said that the second shaft 28, 228 is parallel to the first output shaft 84, 284 and also parallel to the second output shaft 90, 290. The second output shaft 90, 290 is connected with the differential 76, 276 opposite to the first output shaft 84, 284. The basket 78, 278 (which can also be called the cage) of the differential 76, 276 is supported for rotation by a first differential cage bearing 80, 280 and a second differential cage bearing 81, 281, which are both formed as tapered bearings. The tapered bearings 80, 280, 81, 281 are held in place by being mounted in a housing (not shown). The cage 78, 278 carries a toothed wheel 79, 279 mounted on its outer side in a torque-proof manner.

In an alternative embodiment, the toothing on the outside of the differential cage is an integrally formed structure of the differential cage.

The outside toothing 79, 279 of the differential cage 78, 278 is in permanent engagement with the toothing 46, 246 on the second shaft 28, 228. Therefore, the second shaft 28, 228 can drive the differential 76, 276, in particular the cage 78, 278 and by means of the cage 78, 278 the respective output shafts 84, 90; 284, 290 are driven.

A first shaft bearing 26, 226 of the first shaft 24, 224 is arranged between the first shaft 24, 224 and the planet carrier 19, 219. The first shaft bearing 26, 226 is a ball bearing. A first carrier bearing 23, 223, which is formed as a roller bearing, is arranged along the first output shaft 84, 284 between the first shaft bearing 26, 226 and the first differential cage bearing 80, 280. The first carrier bearing 23, 223 supports the planet carrier 19, 219, in particular the toothed wheel 79, 279 mounted on the carrier, against the differential cage 78, 278. A second carrier bearing 23^{I}, 223^{I} is located around a carrier extension 19^{I}, 219^{I} between the output side 6, 206 of the electric propulsion motor 4, 204 and the first gear wheel 50, 250, in particular in the shaft overlap region 13, 213. Thus the second carrier bearing 23^{I}, 223^{I} supports the planet carrier 19, 219 against the housing (not shown).

The bearings, namely first rotor bearing 10, 210, first carrier bearing 23, 223, second carrier bearing 23^{I}, 223^{I}, first shaft bearing 26, 226 form a common bearing arrangement 98, 298 for support of the shafts, namely the rotor shaft 9, 209, the first shaft 24, 224, and the first output shaft 84, 284.

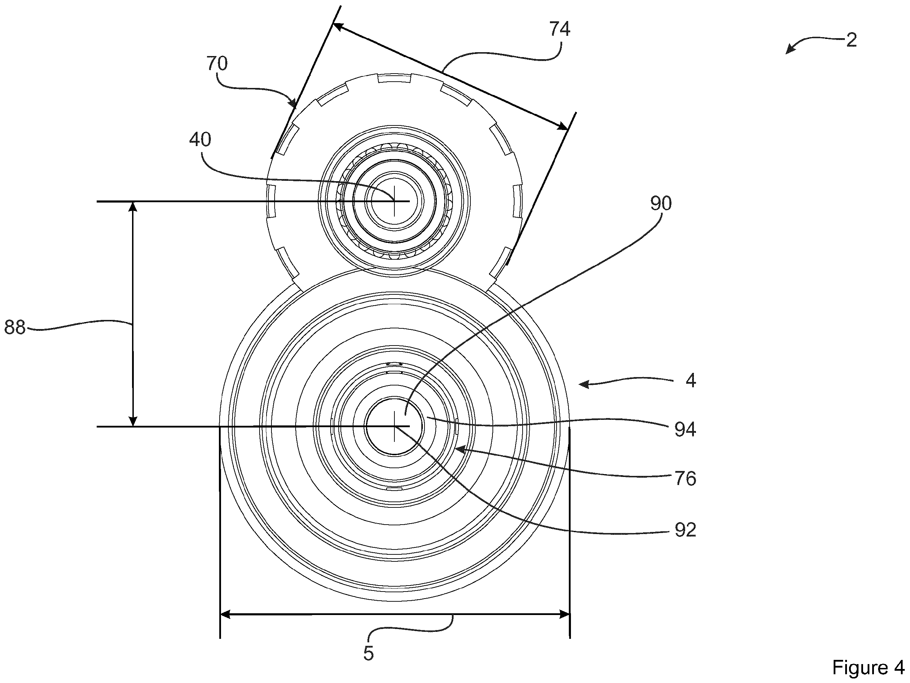

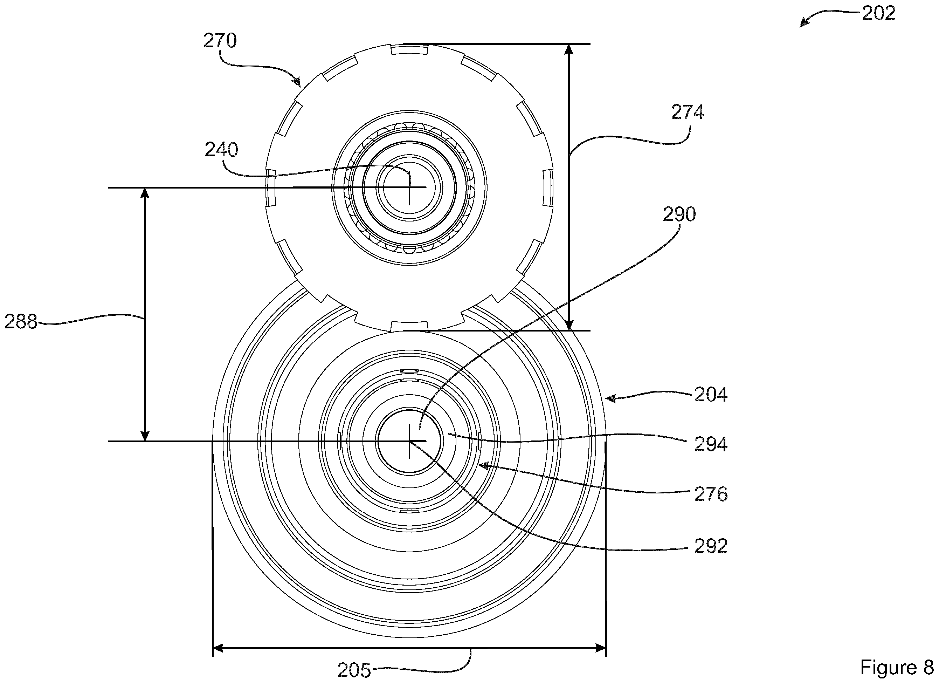

Figure 4 and figure 8 respectively show a perspective of the drivetrain arrangement 2, 202 in direction of the axis 40, 240 through the second shaft and the axis 92, 192 through the output shafts. The two axes 40, 92; 240, 292 have a lateral distance 88, 288 from each other. The parking lock wheel 70, 270, through which the axis 40, 240 through the second shaft leads, has a diameter 74, 274, which is larger than the distance 88, 288 between the axis 40, 240 through the second shaft and the axis 92, 292 through the output shafts. In the perspective of figure 4 and of figure 8, the second output shaft 90, 290 can be seen symmetrically arranged on the output shaft axis 92, 292. The output shaft 90, 290 carries a conical differential gear 94, 294 inside of the differential 76, 276. An outer diameter 5, 205 of the electric propulsion motor 4, 204 is larger than the lateral distance 88, 288.

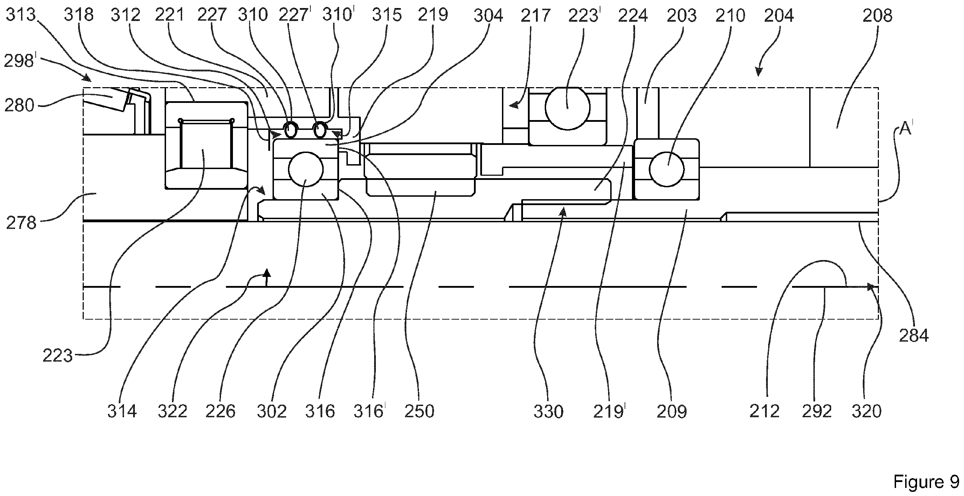

Section A of figure 7 is shown enlarged in Figure 9, in order to illustrate differences of an advanced embodiment based on the drivetrain 202 shown in Figure 7. Therefore reference numerals of respective section A in figure 7 are also present in section A^{I} of figure 9 and respective description of figure 7 can be transferred to figure 9. In the following, additional aspects shown in figure 9 are explained.

Section A^{I} includes parts of the differential cage 278, the first output shaft 284, and the rotor shaft 209 in a first axial direction 320 along a rotor axis 212. Section A^{I} is placed around the first shaft 224. The rotor shaft 209 is supported by the first rotor bearing 210 against a housing 203 and protrudes from the rotor 208 of the electric propulsion motor 204. The rotor shaft 209 is attached to the first shaft 224 by a torque proof shaft connection 330. The rotor shaft 209 and the first shaft 224 are coaxially arranged around the first output shaft 284. The output shaft axis 292 is in line with the rotor axis 212. The planetary gear system 217 comprises the sun gear 250, which is formed in the first shaft 224. Therefore the first shaft can be considered as being part of the planetary gear system 217. The planetary gear system 217 comprises a planet carrier 219, with a planet carrier extension 219^{I}.

Furthermore, the planet carrier extension 219^{I} serves as seat for the second carrier bearing 223^{I} located with its inner ring around the planet carrier extension 219^{I}. The second carrier bearing 223^{I} is a ball bearing. The second carrier bearing 223^{I}, the first shaft bearing 226 and the first carrier bearing 223 are arranged in sequence between the first rotor bearing 210 and the first differential cage bearing 280 along the output shaft axis 292.

Therefore, the first shaft bearing 226 is placed between the first carrier bearing 223 and the second carrier bearing 223^{I}. It can also be said that the first shaft bearing 226 is a sun gear bearing 226. Both are arranged between the sun gear 250 and the first carrier bearing 223 in a compact manner. The first carrier bearing 223 is a roller bearing, which means that the rolling elements - as shown - are cylinders. The first carrier bearing 223 is arranged on the differential cage 278 and supports the planet carrier 219 via its seat 313. The seat 313 extends along the axial direction 320 in the planet carrier 219. The seat 313 provides also radial support 315 for an outer ring 304 of the first shaft bearing 226. An inner ring 302 of the first shaft bearing 226 is arranged on a seat 314 of the first shaft 224. The seats 313, 314 provide also support 316, 316^{I} for the first shaft bearing 226 in the first axial direction 320. The first shaft bearing 226 and the first carrier bearing 223 are configured as a common bearing arrangement 298^{I} in respect of the planet carrier 219. The first shaft bearing 226 is taking the loads of the sun gear 250. From a wider perspective, also the first differential cage bearing 280 and the second carrier bearing 223^{I} can be assigned to the ensemble of the common bearing arrangement 298^{I} of the transmission, in particular of the planetary transmission stage, because those two bearings 280 223^{I} support for rotation against the housing 203.

The first shaft bearing 226 is mounted in a radial direction 322 underneath the toothed wheel 221, which can be considered being a part or another (opposite) extension of the planet carrier 219, because its toothing is fixed to the planet carrier 219 for driving the second gearwheel (see gearwheels 52, 252 in figure 3 and figure 7 respectively).

Different from figure 7, the first shaft bearing 226 shown in figure 9 is arranged with a clearance 312 between the outer ring 304 and the radial support 315. The clearance 312 can also be named a gap 312. The gap 312 is bridged by a first o-ring 227 and a second o-ring 227^{I} arranged in respective grooves 310, 310^{I} in radial direction 322. The grooves 310, 310^{I} in the radial direction 322 are located side by side in the planet carrier 219, in particular in the bearing seat 313 of the planet carrier 219. The outer ring 304 of the ball bearing 226 is held in the two o-rings 227, 227^{I}. The axial position of the outer ring 304 is furthermore limited by an inner stop opposite to the axial support 316^{I}. By this arrangement, the sun gear 250 and the planet carrier 219 have the freedom for centering based on the loads from the planetary set 217.

Different aspects described in one example can be freely combined with aspects of other examples within the scope of this invention. For example, a disconnect can provide reversible connectivity between two shafts or between two sub-shafts or shaft components. It is also possible that a disconnect is arranged between a gearwheel and a shaft or between a gearwheel and a shaft component. The disconnect is configured such that in a disconnected state assumed by the disconnect, the gearwheel is a freewheel, which can be fixed to the shaft or to the shaft component by the disconnect on demand. The disconnect can be configured such that in a disconnected state assumed by the disconnect, two shafts or two (or three) shaft components can be connected with each other by the disconnect. A connect state of the disconnect can be initiated by a person or a computer program based artificial intelligence driving the vehicle through a command given to a hydraulic or electromagnetic actuation system, e. g. by signalling an electric control unit of a vehicle. The disconnect and the parking lock can be operated independent from each other through separate branches of a vehicle controls system (for actuators) via respective actuators by means of the vehicle control unit.

### List of reference signs

- 2, 202: drivetrain, in particular drivetrain arrangement
- 203: housing
- 4, 204: electric propulsion motor, in particular electric machine for recuperation of energy
- 5, 205: diameter of the motor
- 6, 206: motor output side
- 7, 207: stator
- 8, 208: rotor
- 9, 209: rotor shaft, in particular hollow rotor shaft
- 10, 210: first rotor bearing
- 11, 211: second rotor bearing
- 212: rotor axis
- 13, 213: overlap of shafts, provided with an engagement structure
- 14, 214: first transmission stage, in particular first spur-gear stage
- 16, 216: second transmission stage, in particular second spur-gear stage
- 17, 217: planetary gear system, in particular planetary transmission stage
- 18, 218: ring gear
- 19, 219: carrier of at least one planetary gear
- 19^{I}, 219^{I}: carrier extension
- 20, 220: outer toothing
- 21, 221: toothed wheel, in particular first gear of a first transmission stage
- 22, 222: planet gear
- 23, 223: first carrier bearing, in particular roller bearing between differential cage and carrier such as a toothed wheel fixed to the carrier
- 23^{I}, 223^{I}: second carrier bearing, in particular outer ball bearing of the cage against the housing
- 24, 224: first shaft
- 25, 225: hollow shaft
- 26, 226: first shaft bearing, in particular ball bearing between the first shaft and the cage
- 227, 227^{I}: o-ring
- 28, 228: second shaft, in particular bifid shaft
- 30, 230: first sub-shaft, in particular first shaft segment
- 32, 232: second sub-shaft, in particular second shaft segment
- 34, 34^{I}, 234: gap between two shaft components
- 36, 236: segment overlap, in particular intersection
- 38, 238: needle bearing
- 40, 240: axis through the second shaft, in particular axial direction along the second shaft
- 41, 241: hollow shaft
- 42, 242: first tapered roller bearing
- 43, 243: second tapered roller bearing
- 44, 244: input side
- 45, 245: output side
- 46, 246: toothing on the second shaft
- 50, 250: first gearwheel, in particular spur gear, such as a sun gear, on a first shaft
- 52, 252: second gearwheel, in particular spur gear, providing second toothing on the second shaft
- 56, 256: first gearwheel on the first segment of the second shaft, providing first toothing on the second shaft
- 60,260: disconnect
- 61, 261: first component of the disconnect
- 62, 262: second component of the disconnect
- 63, 263: fixed part of the disconnect
- 64, 264: mobile part of the disconnect
- 66, 266: outer tooth
- 70, 270: parking lock, in particular parking lock wheel
- 71, 271: first engagement part
- 72, 272: torque-proof connection
- 74, 274: diameter of the parking lock wheel
- 76, 276: differential
- 78, 278: cage of the differential
- 79, 279: outside toothing of the cage
- 80, 280: first differential cage bearing, in particular tapered bearing
- 81, 281: second differential cage bearing, in particular tapered bearing
- 84, 284: first output shaft
- 85, 285: first end of the first output shaft
- 86, 286: second end of the first output shaft
- 88,288: distance
- 90, 290: second output shaft
- 92, 292: output shaft axis
- 94, 294: conical differential gear of the second output shaft
- 96, 296: coaxial arrangement
- 497: triangular arrangement
- 98, 298, 298^{I}: common bearing arrangement
- 100, 300: transmission
- 302: inner ring
- 304: outer ring
- 310, 310^{I}: groove, in particular ring groove of a planet carrier
- 312: clearance between outer bearing ring and planet carrier, in particular gap in a radial and axial direction
- 313: bearing seat of the planet carrier, in particular seat around two bearings
- 314: seat of an inner ring of a bearing
- 315: radial support of an outer ring of a bearing
- 316, 316^{I}: support, in particular support in a first axial direction
- 318: inner stop, in particular support in a second axial direction
- 320: first axial direction
- 322: first radial direction
- 330: shaft connection
- A, A^{I}: section

## Claims

1. A drivetrain (2, 202) for a vehicle with an electric propulsion motor (4, 204) having a hollow rotor shaft (9, 209),
the drivetrain (2, 202) comprising at least one transmission stage (14, 16, 17, 214, 216, 217) with at least a first shaft (9, 24, 209, 224) being a hollow first shaft (24, 25, 224, 225) and with at least a bifid second shaft (28, 228) being a countershaft of the first shaft and positioned laterally offset from the first shaft (9, 24, 209, 224),
wherein the first shaft and the second shaft are arranged for transmission of torque between the electric propulsion motor (4, 204) and a differential (76, 276),
and with a first output shaft (84, 284) and with a second output shaft (90, 290) forming outputs of the differential (76, 276),
whereas the transmission stage (14, 16, 17, 214, 216, 217) is designed for a rotational speed reduction of a rotational speed of the first shaft (9, 24, 209, 224) by at least two gearwheels (50, 52, 56, 250, 252, 256), of which a first gearwheel (50, 250) is fixed to the first shaft (9, 24, 209, 224) and a second gearwheel (52, 252) is arranged on the second shaft (28, 228),
and the transmission stage (14, 16, 17, 214, 216, 217) comprises a planetary gear system (17, 217) with a planet carrier (19, 219),
wherein the first gearwheel (50, 250) is a sun gear (50, 250) of the planetary gear system (17, 217),
wherein the drivetrain (2, 202) comprises a disconnect (60, 260) being part of the bifid second shaft (28, 228),
wherein the disconnect (60, 260) is arranged to be switched into a disconnected state while a prevailing torque is introduced from the differential (76, 276) to the second shaft (28, 228),
and the drivetrain (2, 202) comprises a parking lock (70, 270),
**characterized in that**
the first shaft (24, 224) and the rotor shaft (9, 209) are connected with each other and supported by a common bearing arrangement (98, 298, 298^{I}) in a coaxial shaft arrangement together with the first output shaft (84, 284), the first output shaft (84, 284) being a center shaft,
the common bearing arrangement (98, 298, 298^{I}) comprising a first shaft bearing (26, 226), which is arranged between the first shaft (9, 24, 209, 224) and the planet carrier (19, 219), and a first carrier bearing (23, 223) being a roller bearing, which is arranged between a differential cage (78, 278) and the planet carrier (19, 219).

2. The drivetrain (2, 202) according to claim 1,
**characterized in that**
the common bearing arrangement (98, 298, 298^{I}) comprises
a first rotor bearing (10, 210) of the rotor shaft (9, 209),
a second carrier bearing (23^{I}, 223^{I}) of the planet carrier (19, 219),
and preferably a second rotor bearing (11, 211) of the rotor shaft (9, 209).

3. The drivetrain (2, 202) according to claim 1 or claim 2,
**characterized in that**
the common bearing arrangement (98, 298, 298^{I}) comprises a first differential cage bearing (80, 280), preferably configured as a tapered roller bearing,
wherein the first carrier bearing (23, 223) is arranged along the first output shaft (84, 284) between the first shaft bearing (26, 226) and the first differential cage bearing (80, 280),
and preferably comprises a second differential cage (81, 281) bearing, preferably configured as a tapered roller bearing, wherein the differential (76, 276), in particular the differential cage (78, 278), is supported by and arranged between the two differential cage bearings (80, 81, 280, 281) held in place by being mounted in a housing (203).

4. The drivetrain (2, 202) according to claim 2 or claim 3,
**characterized in that**
the first rotor bearing (10, 210) is a ball bearing,
the first carrier bearing (23, 223) is a cylindrical roller bearing,
the second carrier bearing (23^{I}, 223^{I}) is an outer ball bearing of the differential cage (78, 278) supporting the differential cage (78, 278) against a housing (203), and
the first shaft bearing (26, 226) is a ball bearing.

5. The drivetrain (202) according to any one of the previous claims,
**characterized in that**
the first shaft bearing (226) is configured for providing a radial clearance (312), wherein preferably an outer ring (304) of the first shaft bearing (26, 226) is held radially in at least one or in at least two elastic o-rings (227, 227^{I}) against the planet carrier (19, 219), the o-ring(s) bridging a gap between the outer ring (304) and an outer seat (313) of the first shaft bearing (226), wherein preferably the outer seat (313) is formed on a second side being a transmission side of the planet carrier (19, 219) opposite to a first side being a motor (4, 204) side of the planet carrier (19, 219).

6. The drivetrain (2, 202) according to any one of the previous claims,
**characterized in that**
the second shaft (28, 228) comprises a first sub-shaft (30, 230) and a second sub-shaft (32, 232) arranged in line and
the disconnect (60, 260) comprises at least two components (61, 62, 261, 262) located around the second shaft (28, 228) at an intersection (36, 236) of the second shaft (28, 228, 428) between the first sub-shaft (30, 230) and the second sub-shaft (32, 232), wherein preferably at least one of the at least two components of the disconnect (60, 260) is movable in an axial direction (40, 240) along the second shaft (28, 228) and preferably one of the at least two components (61, 62, 261, 262) of the disconnect (60, 260), preferably a component (62, 262) of the at least two components (61, 62, 261, 262) located in proximity of an output side (45, 245) of the second shaft (28, 228), is integrally formed with outer teeth (66), the teeth (66) being arranged for engagement with a parking lock mechanism, thereby forming the parking lock (70, 270), which is configured to immobilize at least one of the two sub-shafts (30, 32, 230, 232) of the second shaft (28, 228).

7. The drivetrain (2, 202) according to claim 6,
**characterized in that**
the second shaft (28, 228) comprises at least two gearwheels (52, 56, 252, 256),
of which one gearwheel (56, 256) is on the first sub-shaft (30, 230) and said second gearwheel (52, 252) is on the second sub-shaft (32, 232) for driving the gearwheel (56, 256) of the first sub-shaft (30, 230) by the electric propulsion motor (4, 204),
wherein preferably a needle bearing (38, 238) is arranged in an overlap region (36, 236) between the first sub-shaft (30, 230) and the second sub-shaft (32, 232),
and wherein the first (30, 230) and the second sub-shafts (32, 232) are configured for being connected to each other by the disconnect (60, 260).

8. The drivetrain (2, 202) according to any one of the previous claims,
**characterized in that**
the disconnect (60, 260) is configured to be switched from a disconnected state to a coupled state and vice versa,
wherein in the disconnected state, transfer of torque via the second shaft (28, 228), preferably transfer of torque from the differential (76, 276) to the first shaft (9, 24, 209, 224) and/or to the electric motor (4, 204), is interrupted.

9. The drivetrain (2, 202) according to any one of the previous claims,
**characterized in that**
the disconnect (60, 260) is a device, which comprises a normally open clutch,
which preferably is configured to assume an open state through spring force, such as a toothed clutch or a synchro-sleeve clutch,
and which is configured to be closed by means of an electric or a hydraulic actuation force.

10. The drivetrain (2, 202) according to any one of the claims 2 to 9,
**characterized in that**
the differential cage (78, 278) has at least one outside toothing (79, 279) in a circular arrangement,
wherein a first row of teeth of the outside toothing (79, 279) is in engagement with a toothing (56, 256) arranged on the second shaft (28, 228) and
preferably a second row of teeth of the outside toothing belongs to the parking lock.

11. The drivetrain (2, 202) according to any one of the previous claims,
**characterized in that**
the parking lock (70, 270) and the disconnect (60, 260) are mounted in adjacent positions, wherein preferably a toothed wheel of the parking lock (70, 270) is mounted opposite to a part of the disconnect (60, 260) that is fixed (63, 263) on the second shaft (28, 228).

12. The drivetrain (2, 202) according to any one of the previous claims,
**characterized in that**
the first output shaft (84, 284) extends through the electric propulsion motor (4, 204) and comprises a first end (85, 285) which is connected with the differential (76, 276) and preferably comprises a second end (86, 286) which is located at a distance from the electric propulsion motor (4, 204) and opposite to an output side (6, 206) of the electric propulsion motor (4, 204) and preferably opposite to the second output shafts (90, 290) connected with the differential (76, 276) so that both output shafts (84, 90, 284, 290) are arranged in line.

13. The drivetrain (2, 202) according to any one of the claims 2 to 12,
**characterized in that**
the second shaft (28, 228) is a hollow shaft (41, 241), preferably supported by-a first and
a second tapered roller bearing (42, 43, 242, 243) located at respective ends of the second shaft (28, 228).

14. The drivetrain (2, 202) according to any one of the claims 2 to 13,
**characterized in that**
the planet carrier (19, 219) comprises an outer carrier toothing (20, 220) and/or or a toothed wheel (21, 221) fixed to the planet carrier (19, 219),
which is engaged with a spur gear (52, 252) that belongs to the second shaft (28, 228), wherein preferably a torque provided by the electric propulsion motor (4, 204) to the first shaft (9, 24, 209, 224) can be transferred from the first shaft (9, 24, 209, 224) via the planetary gear system (17, 217) to the spur gear (52, 252) and further on to at least one side of the disconnect (60, 260).

15. A Method of operating a drivetrain (2, 202),
wherein an electric machine (4, 204) being operated as a propulsion motor (4, 204) can provide a first torque in a first state of operation through a transmission stage (14, 16, 204, 216) of a transmission (100, 300) of the drivetrain arrangement (2, 202) to a differential (76, 276), which is connected to two road wheels, and
preferably, when the drivetrain (2, 202) is operated in a second state, at least one road wheel can provide a second torque via the transmission stage (14, 16, 214, 216) to the electric machine (4, 204) being operated as an electric generator,
**characterized in that**
the drivetrain (2, 202) is configured according to any one of the previous claims and in being switched to a freewheel state, the drivetrain (2, 202) is interrupted by the disconnect (60, 260) arranged between the electric machine (4, 204) and the differential (76, 276) **in that** the closed disconnect (60, 260) assumes a normally open position and when the road wheels are at rest, a hold state of operation is switched by a parking lock mechanism so that the road wheels are blocked against further rotation by means of the engaged parking lock (70, 270).
